# FASCICULE DE BREVET EUROPEEN

(11) **EP 1 076 482 B1**
(45) Date de publication et mention de la délivrance du brevet: **02.07.2003**
(21) Numéro de dépôt: 00909409.5
(22) Date de dépôt: 03.03.2000
(51) Int. Cl.: A01D 78/10

(54) **MACHINE DE FENAISON AVEC AU MOINS UN ROTOR D'ANDAINAGE MUNI D'UN DEFLECTEUR DONT LA POSITION EST REGLABLE**
HEUERNTEMASCHINE MIT MINDESTENS EINEM ROTOR ZUM SCHWADEN MIT IN POSITION VERSTELLBAREM LEITBLECH
HAY HARVESTING MACHINE PROVIDED WITH AT LEAST A SWATHING ROTOR EQUIPPED WITH A DEFLECTOR WITH ADJUSTABLE POSITION

(30) Priorité: 05.03.1999 FR 9902854
(43) Date de publication de la demande: 21.02.2001
(73) Titulaire: KUHN S.A., 67706 Saverne Cedex (FR)
(72) Inventeur: HELFER, Marc, F-67500 Niederschaeffolsheim (FR); QUIRIN, Michel, F-67310 Allenwiller (FR)
(74) Mandataire: Andres, Jean-Claude
(86) Numéro de dépôt international: FR0000526
(87) Numéro de publication internationale: WO00052992

(56) Documents cités:
- EP-A- 0 763 321
- EP-A- 0 845 199
- CH-A- 477 807
- DE-B- 2 127 701
- DE-U- 9 400 521

## Description

La présente invention se rapporte à une machine de fenaison, notamment une andaineuse de végétaux fauchés, comportant un bâti avec plusieurs rotors d'andainage, lesquels rotors d'andainage sont entraînés en rotation durant le travail autour d'axes sensiblement verticaux qui sont munis de supports équipés de roues porteuses, ledit bâti comprenant une poutre de traction et une poutre de liaison à laquelle est relié au moins un des rotors d'andainage, la poutre de liaison étant articulée par rapport à la poutre de traction de manière à pouvoir être déplacée avec le ou les rotors qui y sont reliés latéralement vers la droite et/ou vers la gauche, au moins le rotor de la poutre de liaison qui se situe le plus en arrière étant muni d'un déflecteur d'andainage dont la position est réglable.

Une telle machine est connue par le document EP-A-0845199.

Sur une machine de ce genre, le déflecteur d'andainage du rotor le plus en arrière limite la projection latérale du fourrage et favorise la formation d'un andain régulier. La distance entre le déflecteur et ledit rotor est avantageusement réglable de manière à pouvoir l'adapter à la masse et à la nature des végétaux à andainer. Lorsque ladite masse est faible, il est préférable de rapprocher le déflecteur du rotor afin que l'andain ne soit pas trop étalé. Inversement, lorsque la masse de végétaux est importante, il faut éloigner le déflecteur du rotor pour que l'andain puisse se former correctement et ne soit pas comprimé. Par ailleurs, lorsque le rotor le plus en arrière est transposé avec la poutre de liaison d'une première position de travail, dans laquelle ledit rotor se situe sur le côté gauche par rapport au rotor qui le précède, dans une deuxième position de travail, dans laquelle il se situe sur le côté droit par rapport au rotor qui le précède, le déflecteur d'andainage correspondant doit être enlevé pour éviter qu'il n'entre en collision avec ledit rotor qui le précède.

Cette opération est fastidieuse à réaliser. En sus, elle peut être omise. Dans ce cas, la collision entre le déflecteur et le rotor qui précède provoquerait d'importants dégâts.

La présente invention a pour but de proposer une machine de fenaison telle que décrite dans l'introduction et qui ne présente pas les inconvénients précités.

A cet effet, une importante caractéristique de l'invention consiste en ce que la machine comporte une butée escamotable pour le déplacement de la poutre de liaison autour de son axe d'articulation, des moyens permettant de déplacer notablement le déflecteur d'andainage par rapport au rotor correspondant et un dispositif de commande de la butée qui est actionné par les moyens de déplacement du déflecteur d'andainage.

Dans cet agencement, la butée empêche la transposition de la poutre de liaison et du rotor correspondant de la première position de travail dans la deuxième position de travail tant que le déflecteur peut rencontrer le rotor qui le précède. Par contre, lorsque le déflecteur est déplacé dans la position où le risque de collision est supprimé, la butée est escamotée et la transposition est possible.

De plus, comme le réglage de la butée est combiné avec celui du déflecteur d'andainage, il s'effectue automatiquement et ne demande aucune attention particulière de la part de l'utilisateur. La mise en oeuvre de la machine selon l'invention est simple et sans risque.

D'autres caractéristiques et avantages de l'invention ressortiront de la description qui va suivre et qui se réfère aux dessins annexés qui représentent, à titre d'exemples non limitatifs, quelques formes de réalisation de la machine selon l'invention.

Dans ces dessins :
- la figure 1 représente une vue de dessus d'une machine selon l'invention dans une première position de travail,
- la figure 2 représente à plus grande échelle une vue de détail du rotor arrière de la machine,
- la figure 3 représente une vue de dessus de la machine selon l'invention dans une deuxième position de travail,
- la figure 4 représente une vue de détail du rotor arrière dans la deuxième position de travail,
- la figure 5 représente une vue similaire à celle de la figure 2 d'un autre exemple de réalisation,
- la figure 6 représente le rotor selon la figure 5 dans la deuxième position de travail.

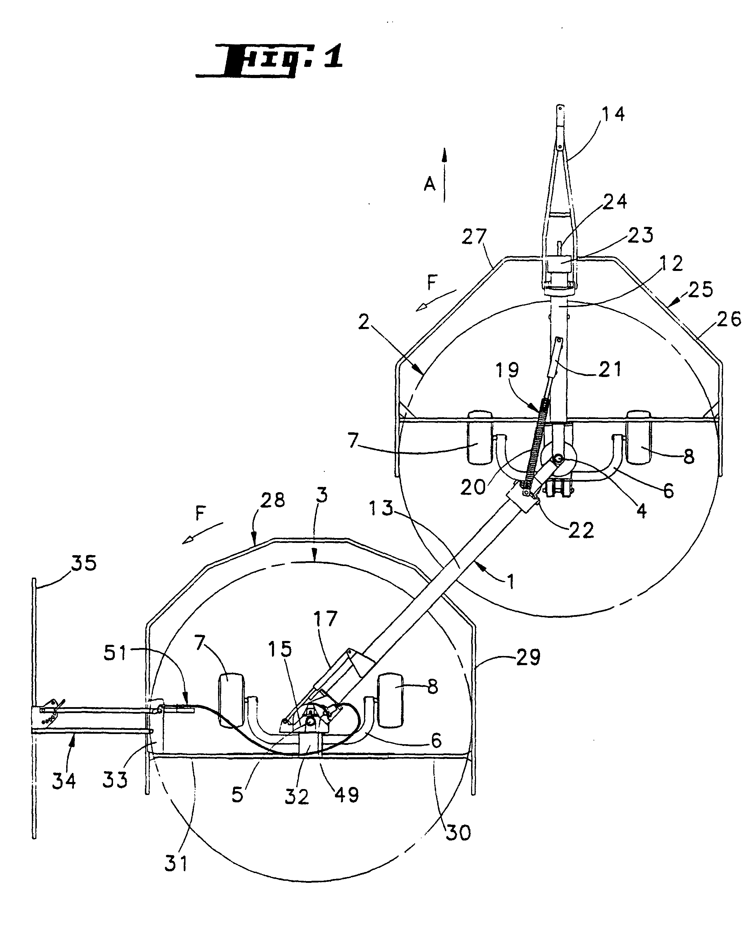

Telle qu'elle est représentée sur les figures 1 à 4, la machine selon l'invention comporte un bâti (1) qui porte deux rotors d'andainage (2 et 3) situés à une certaine distance l'un derrière l'autre. Ces rotors (2 et 3) sont montés rotatifs sur des axes (4 et 5) sensiblement verticaux. Chacun de ces axes (4 et 5 ) porte à son extrémité inférieure un support (6) équipé de deux roues porteuses (7 et 8). Ce support (6) est réglable en hauteur par rapport à l'axe (4, 5) correspondant de manière à pouvoir modifier la distance du rotor (2, 3) correspondant par rapport au sol.

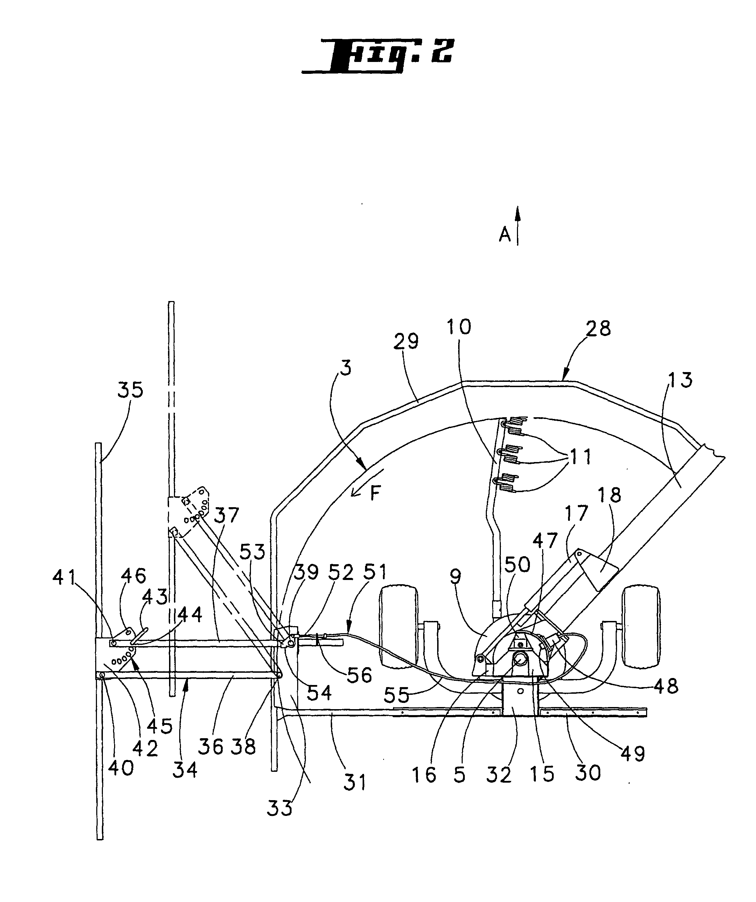

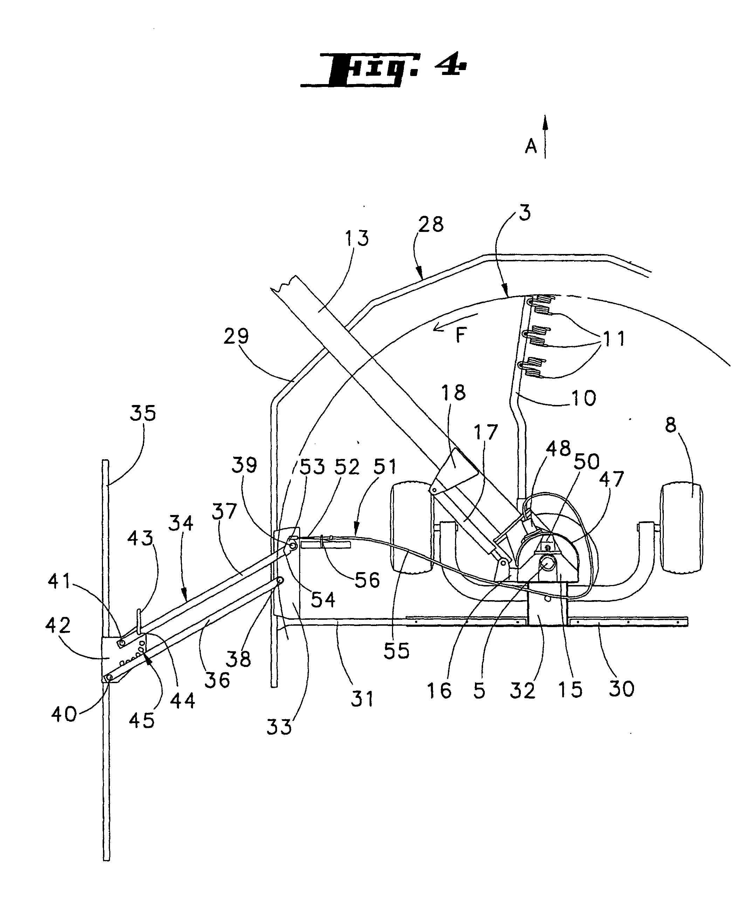

Chacun de ces rotors (2, 3) se compose essentiellement d'un carter central (9) qui est monté sur l'axe (4, 5) correspondant au moyen de roulements à billes. Ce carter central (9) porte plusieurs bras (10) qui s'étendent dans un plan pratiquement horizontal. Un seul de ces bras (10) est représenté sur les figures 2 et 4 pour préserver la clarté des dessins. Ils sont munis à leurs extrémités les plus éloignées dudit carter central (9) de fourches de râtelage (11). Chacun de ces bras (10) est monté dans un palier du carter central (9) correspondant de manière à pouvoir pivoter sur lui-même, c'est-à-dire autour de son axe géométrique longitudinal. Dans le carter central (9) se situe une came de commande qui est fixée sur l'axe (4, 5) correspondant. Chaque bras porte-fourches (10) possède à son extrémité située à l'intérieur du carter central (9) un galet qui coopère avec ladite came de commande.

Le bâti (1) comprend une poutre de traction (12) et une poutre de liaison (13). La poutre de traction (12) est fixée sur l'extrémité supérieure de l'axe sensiblement vertical (4) du rotor (2) le plus en avant (vu dans le sens d'avancement (A)). Elle s'étend au-dessus de ce rotor (2), vers l'avant, au-delà de ses bras porte-fourches (10). Elle porte à son extrémité avant un timon (14) qui permet l'attelage à un tracteur servant à déplacer et à animer la machine. Une des extrémités de la poutre de liaison (13) est articulée sur l'axe (4) sensiblement vertical du rotor (2) le plus en avant, de manière à pouvoir pivoter autour de celui-ci. Elle pourrait aussi bien être articulée sur un axe sensiblement vertical directement solidaire de la poutre de traction (12). L'autre extrémité de la poutre de liaison (13) est articulée sur l'axe (5) sensiblement vertical du deuxième rotor (3). Cet axe (5) peut tourner sur lui-même par rapport à la poutre (13). Il comporte à son extrémité supérieure un manchon (15). Celui-ci est immobilisé sur ladite extrémité à l'aide d'un moyen tel qu'une clavette ou une goupille. Ce manchon (15) possède un bras latéral (16) sur lequel est articulée la tige d'un vérin hydraulique (17). Le corps de ce vérin hydraulique (17) est articulé sur une chape (18) qui est solidaire de la poutre de liaison (13). Ledit vérin hydraulique (17) peut être commandé depuis le tracteur. Il permet de déplacer le manchon (15) de telle sorte qu'il fasse tourner l'axe (5) sensiblement vertical sur lui-même. Un troisième rotor sensiblement identique aux rotors (2 et 3) pourrait être disposé entre ces derniers dans le cas d'une machine avec une largeur de travail plus importante.

Un dispositif de maintien (19) est disposé entre la poutre de traction (12) et la poutre de liaison (13) en vue de favoriser le placement du rotor (3) le plus en arrière dans une position décalée latéralement par rapport au premier rotor (2) durant le travail. Dans l'exemple représenté, ce dispositif de maintien (19) se compose d'un ressort de traction (20) et d'un vérin hydraulique (21). Ledit ressort (20) est accroché, par l'une de ses extrémités, à la poutre de liaison (13) et, par son autre extrémité, à la tige du vérin hydraulique (21) dont le corps est articulé sur la poutre de traction (12).

La poutre de liaison (13) comporte un axe d'articulation (22) sensiblement horizontal. Cet axe d'articulation (22) s'étend transversalement à la poutre (13) et est réalisé en deux parties alignées l'une sur l'autre afin de laisser libre l'intérieur de la poutre (13). Il se situe à proximité de l'axe (4) sensiblement vertical du rotor (2) le plus en avant. Cette situation permet au rotor (3) le plus en arrière de se déplacer en hauteur autour dudit axe (22), pour bien suivre les dénivellations du sol.

L'entraînement en rotation des deux rotors (2 et 3) est assuré mécaniquement à partir de l'arbre de prise de force du tracteur. A cet effet, la poutre de traction (12) porte à son extrémité avant un carter d'entrée (23) avec un arbre (24) auquel peut être relié un arbre à cardans entraîné depuis le tracteur. Dans la poutre de traction (12) est logé un premier arbre de transmission qui s'étend du carter d'entrée (23) jusqu'au carter central (9) du rotor (2) la plus en avant. Il porte à son extrémité arrière un pignon qui engrène avec une couronne dentée solidaire du carter central (9) de ce rotor (2). Un second arbre de transmission qui est logé dans la poutre de liaison (13) s'étend entre les deux rotors (2 et 3). Il comporte à son extrémité avant un pignon qui engrène avec la couronne dentée solidaire du carter central (9) du rotor avant (2) et à son extrémité arrière un pignon qui engrène avec une deuxième couronne qui est solidaire du carter central (9) du rotor (3) le plus en arrière. Ce second arbre de transmission comporte une articulation à cardan ou analogue au niveau de l'axe d'articulation (22) de la poutre de liaison (13).

La poutre de traction (12) porte un dispositif de protection (25) qui entoure au moins la moitié avant du rotor (2) le plus en avant. Ce dispositif de protection (25) est essentiellement constitué par des tubes coudés (26 et 27). Un deuxième dispositif de protection (28) entoure la moitié avant du rotor (3) le plus en arrière. Il est constitué par un tube coudé (29) qui est fixé à deux supports transversaux (30, 31). Ces supports (30, 31) sont eux-mêmes fixés sur une entretoise (32) qui est liée au manchon (15) solidaire de l'axe sensiblement vertical (5).

Le dispositif de protection (28) et ledit support (31) portent une plaque (33) sur laquelle sont articulés des moyens de déplacement (34) d'un déflecteur d'andainage (35) qui se situe sur le côté latéral du rotor (3) le plus en arrière. Ces moyens (34) sont constitués par deux leviers (36 et 37) qui sont articulés avec des premiers axes (38 et 39) sensiblement verticaux sur la plaque (33) et avec des seconds axes (40 et 41) sensiblement verticaux sur une patte (42) portant le déflecteur (35). Les deux leviers (36 et 37), la plaque (33) et la patte (42) forment un parallélogramme déformable permettant de régler le déflecteur (35) dans plusieurs positions relativement proches l'une de l'autre pour l'adapter au volume de l'andain formé. Ledit déflecteur (35) peut être immobilisé dans ces positions au moyen d'une broche (43). Le levier (37) comporte un orifice (44) à travers lequel peut passer ladite broche (43). La patte (42) comporte plusieurs orifices (45) qui sont légèrement espacés entre eux et qui peuvent être amenés sous l'orifice (44) du levier (37). De cette manière, la broche (43) peut également être engagée dans l'un de ces orifices (45) en vue d'immobiliser la patte (42) et le déflecteur (35) par rapport au levier (37) dans la position choisie. L'agencement des leviers (36 et 37) permet de conserver l'orientation dans la direction d'avancement (A) du déflecteur (35) dans chacune de ces positions.

La patte (42) comporte un orifice (46) supplémentaire qui est plus éloigné des orifices (45) précités et qui se situe à l'avant de ceux-ci. Le déflecteur (35) peut être pivoté vers l'arrière d'un angle relativement important, d'environ 30° ou plus, au moyen des leviers (36 et 37) et être arrêté dans une position arrière en engageant la broche (43) dans l'orifice (44) du levier (37) et dans l'orifice supplémentaire (46) de la patte (42).

La poutre de liaison (13) comporte près de son extrémité arrière un rebord (47) en forme d'arc de cercle, avec un logement (48) situé sur le côté droit par rapport au milieu de ladite poutre (13). Dans ce logement (48) se situe une butée escamotable (49). Celle-ci est constituée par un cylindre qui est dirigé horizontalement vers l'axe sensiblement vertical (5) du rotor arrière (3). Cette butée (49) est déplaçable longitudinalement dans ledit logement. Elle est associée à un ressort de pression qui se situe également dans le logement (48). Ce ressort pousse la butée (49) vers une position active dans laquelle elle s'étend partiellement hors du logement (48) et au-delà du rebord (47).

Le manchon (15) qui est solidaire de l'axe sensiblement vertical (5) du rotor (3) le plus en arrière comporte un arrêt (50) situé devant ledit axe (5). Cet arrêt (50) est dirigé dans la direction d'avancement (A) et s'étend jusqu'au voisinage du rebord (47). Il se déplace avec l'axe (5) et le manchon (15) lorsque ceux-ci sont déplacés en rotation à l'aide du vérin hydraulique (17). La butée escamotable (49) est disposée de telle sorte qu'elle s'étend en position active dans la zone de déplacement dudit arrêt (50).

La butée escamotable (49) est reliée à un dispositif de commande (51) qui est actionné par les moyens de déplacement (34) du déflecteur d'andainage (35). Ce dispositif (51) permet de la déplacer longitudinalement de la position active dans une position inactive dans laquelle elle est davantage ou totalement rentrée dans le logement (48) et inversement. Ledit dispositif (51) comporte un câble de commande (52) qui est relié à l'extrémité de la butée (49) qui se situe dans le logement (48) et à une plaquette (53) qui est articulée sur l'axe sensiblement vertical (39) qui assure également l'articulation du levier (37) sur la plaque (33). Cette plaquette (53) comporte un taquet d'entraînement (54) qui s'étend dans la zone de déplacement du levier (37) et qui est entraîné par celui-ci lorsqu'il est déplacé vers l'arrière. Le câble de commande (52) est guidé dans une gaine (55) qui s'étend entre la paroi du logement (48) et un arrêt (56) prévu à proximité de la plaquette (53).

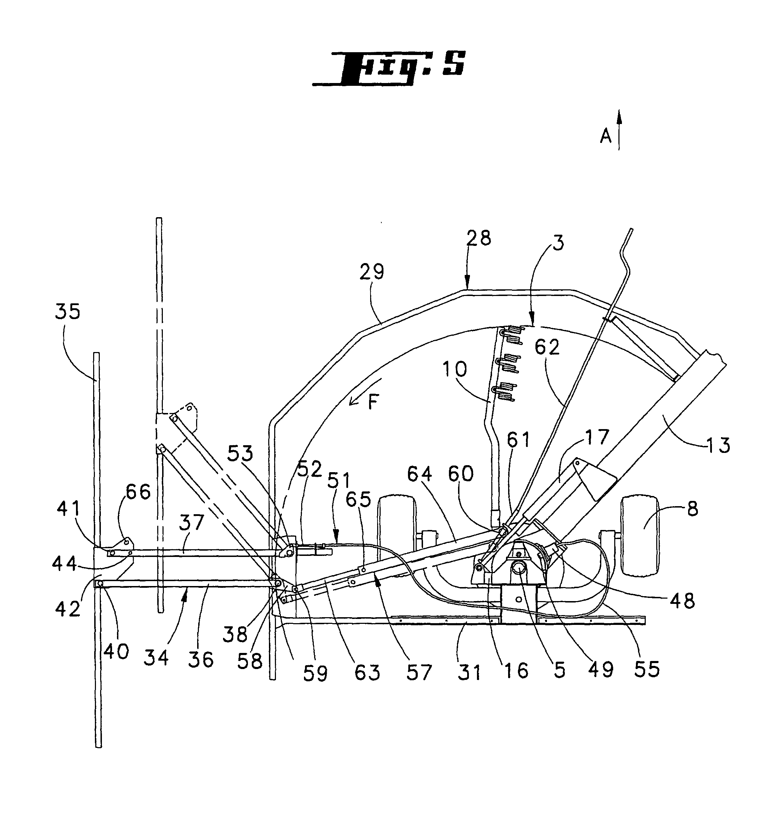

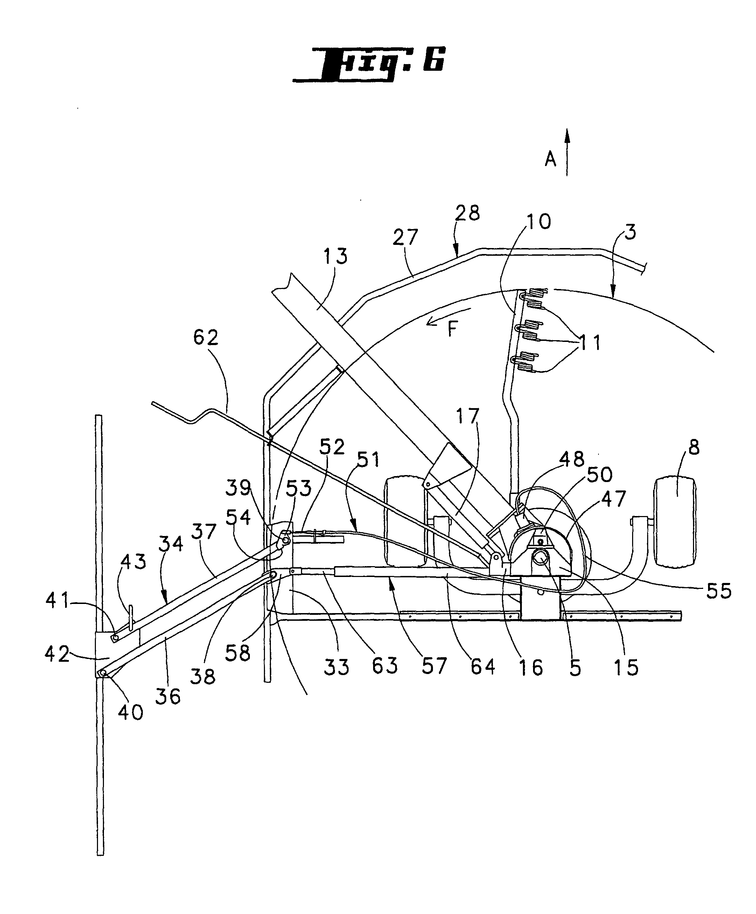

L'exemple de réalisation selon les figures 5 et 6 comporte de nombreuses pièces communes avec l'exemple décrit ci-dessus. Ces pièces ne seront plus décrites en détail mais seront désignées par les mêmes repères. Dans cet exemple, le levier (36) des moyens de déplacement (34) du déflecteur (35) est relié à la poutre de liaison (13) à l'aide d'une tringle (57). L'une des extrémités de cette tringle (57) est articulée sur une patte (58) du levier (36) au moyen d'un axe (59) sensiblement vertical. L'autre extrémité de la tringle (57) est articulée sur un axe (60) sensiblement vertical qui est vissé sur une tige filetée (61) elle-même reliée à la poutre de liaison (13). Cette tige filetée (61) est libre en rotation et bloquée en translation. Une manivelle (62) permet de la faire tourner sur elle-même. L'axe (60) se déplace alors longitudinalement sur cette tige filetée (61) et entraîne la tringle (57). Cette dernière actionne le levier (36) de telle sorte qu'il pivote autour de son axe d'articulation (38) et modifie la position du déflecteur d'andainage (35) par rapport au rotor (3). La tringle (57) est réalisée en deux parties (63 et 64) coulissantes l'une dans l'autre. Ces deux parties (63 et 64) peuvent être immobilisées l'une par rapport à l'autre au moyen d'une goupille (65) qui est amovible.

La patte (42) comporte un orifice (66) pour l'immobilisation du déflecteur (35) par rapport au levier (37) lorsqu'il est déplacé vers l'arrière dans la deuxième position de travail (figure 6).

Au travail, l'andaineur est accroché à un tracteur au moyen d'un timon (14) et est déplacé dans la direction (A). Dans la première position de travail représentée sur les figures 1 et 2, le rotor (3) le plus en arrière est décalé latéralement vers la gauche par rapport au rotor (2) le plus en avant. Ils sont ainsi disposés suivant une ligne oblique par rapport à la direction d'avancement(A) de sorte que leurs trajectoires se recouvrent partiellement. Le rotor (3) le plus en arrière est placé dans cette position décalée au moyen du vérin hydraulique (17) qui est actionné pour qu'il s'allonge et du dispositif de maintien (19) qui tire sur la poutre de liaison (3). Lors dudit allongement, le vérin hydraulique (17) oriente le manchon (15), l'axe (5) sensiblement vertical et le support (6) avec les roues (7 et 8) vers le côté gauche, afin que ces dernières provoquent ledit décalage.

Les deux rotors (2 et 3) sont entraînés en rotation dans le même sens (F) à partir de l'arbre de prise de force du tracteur. Par suite de cette rotation, les galets situés aux extrémités des bras porte-fourches (10) se déplacent dans la came qui est logée dans le carter (9) correspondant. Cette came commande lesdits bras (10) de sorte que les fourches (11) soient dirigées vers le sol dans la partie avant de leur trajectoire et qu'elles pivotent vers le haut dans la partie latérale de leur trajectoire dans laquelle elles se déplacent vers l'arrière (vu dans la direction d'avancement (A)). Dans ladite partie avant les fourches (11) ramassent le fourrage qui se trouve sur le sol. Ensuite, elles le déposent sous la forme d'un andain grâce à leur pivotement dans la partie latérale de leur trajectoire. En raison de la disposition des deux rotors (2 et 3), l'andain formé par le rotor (2) le plus en avant est repris par l'autre rotor (3) qui forme un andain unique de plus gros volume. La largeur de cet andain est limitée par le déflecteur (35). Celui-ci peut être déplacé vers l'avant et rapproché du rotor (3) au moyen des leviers (36 et 37) en vue de réduire la largeur de l'andain. Une position intermédiaire du déflecteur (35) est représentée en traits interrompus sur la figure 2. Il peut être immobilisé dans différentes positions à l'aide de la broche (43) qui peut être engagée dans l'orifice (44) du levier (37) et dans un des orifices (45).

Dans cette première position de travail de l'andaineur, le levier (37) n'exerce aucune action sur le taquet (54) de la plaquette (53). Le câble de commande (52) est relâché, ce qui permet au ressort prévu dans le logement (48) de la butée (49) de pousser celle-ci dans sa position active. Cette butée (49) s'étend alors partiellement hors du logement (48) et se situe dans la zone de déplacement de l'arrêt (50). Elle empêche ainsi le pivotement du rotor arrière (3) vers le côté droit de la machine.

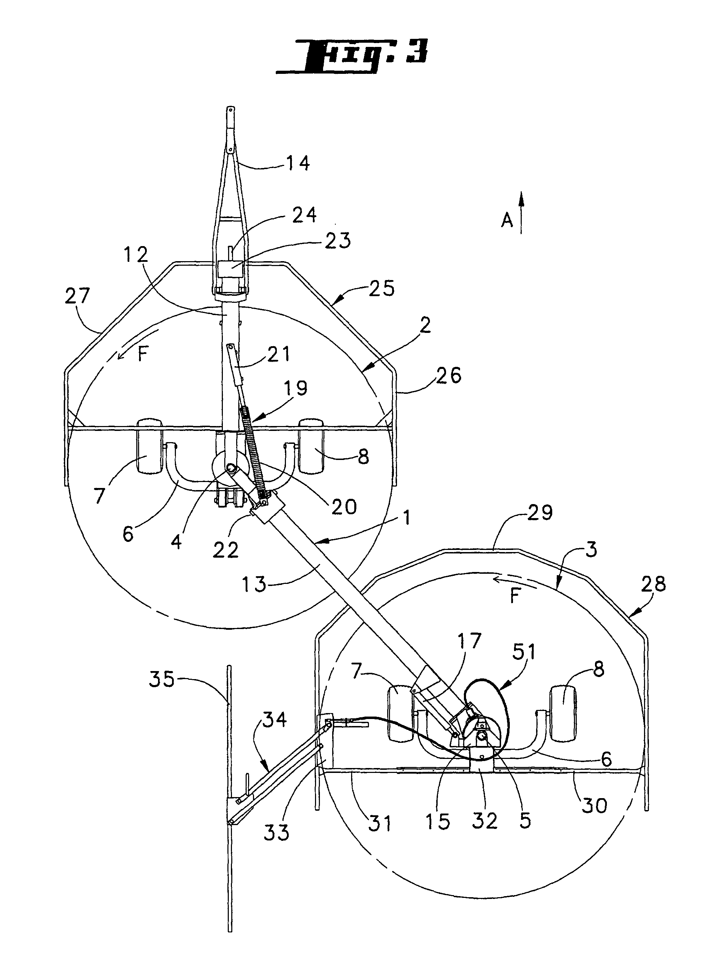

Dans la deuxième position de travail qui est représentée sur les figures 3 et 4, le rotor (3) le plus en arrière est décalé latéralement vers la droite par rapport au rotor avant (2). Dans cette position chaque rotor (2 et 3) forme son propre andain, ce qui peut être avantageux lorsque le produit à andainer est très dense et volumineux. Pour passer dans cette position l'utilisateur doit tout d'abord déplacer d'une manière notable le déflecteur (35) vers l'arrière, afin qu'il n'entre pas en collision avec le rotor avant (2). Pour cela, il dégage la broche (43) et fait pivoter le déflecteur (35) vers l'arrière au moyen des leviers (36 et 37) jusqu'à ce qu'il puisse engager la broche (43) dans l'orifice (44) sur le levier (37) et l'orifice (46) de la patte (42). Durant ce pivotement, le levier (37) entraîne le taquet (54) et fait pivoter la plaquette (53) sur l'axe (39). Celle-ci tire sur le câble de commande (52) qui glisse dans la gaine (55) et tire de l'autre côté la butée (49) dans le logement (48). Ainsi, cette butée (49) s'escamote et libère la zone de déplacement de l'arrêt (50). Ensuite, l'utilisateur actionne, d'une part, le vérin hydraulique (21) pour qu'il s'allonge et relâche le ressort (20) et, d'autre part, le vérin hydraulique (17) pour qu'il se raccourcisse et fasse tourner le manchon (15), l'axe (5) sensiblement vertical et le support (6) avec les roues porteuses (7 et 8) vers la droite (vu dans le sens d'avancement (A)). Lorsque la machine est alors déplacée dans la direction d'avancement (A), les roues porteuses (7 et 8) s'orientent automatiquement dans cette direction et font tourner la poutre de liaison (13) vers la droite autour de l'axe (4) sensiblement vertical du rotor avant (2). Le rotor arrière (3) arrive alors dans la position représentée sur la figure 4. Le déflecteur (35) se situe sur le côté latéral du rotor arrière (3) et suffisamment en retrait par rapport au rotor avant (2) pour ne pas entrer en collision avec lui. Le câble de commande (52) retient la butée (49) dans la position escamotée. Enfin, le vérin hydraulique (21) est actionné pour qu'il tende à nouveau le ressort (20) qui maintient la poutre de liaison (13) dans la nouvelle position.

Pour revenir dans la première position de travail, il suffit de détendre le ressort (20) du dispositif de maintien (19), d'actionner le vérin hydraulique (17) de sorte qu'il oriente les roues porteuses (7 et 8) vers la gauche et d'avancer avec la machine. La butée (49) reste en position escamotée jusqu'à ce que le déflecteur (35) soit déplacé vers l'avant au moyen des leviers (36 et 37) dans la première position de travail. Le levier (37) libère alors le taquet (54) et la plaquette (53) qui relâche le câble de commande (52). Le ressort qui se situe dans le logement (48) pousse alors la butée (49) dans la position active où elle limite à nouveau les possibilités de pivotement de la poutre de liaison (13) autour de l'axe (4) du rotor avant (2).

Pour le transport, le rotor arrière (3) peut être placé derrière le rotor avant (2) et le déflecteur (35) peut être amené contre ledit rotor arrière (3) en vue de réduire la largeur de la machine.

Dans l'exemple selon les figures 5 et 6, la position du déflecteur (35) dans la première position de travail peut être réglée au moyen de la manivelle (62) et de la tringle (57). Cette dernière déplace automatiquement le déflecteur (35) par l'intermédiaire de la patte (58) et du levier (36) lorsque son axe (60) est déplacé sur la tige filetée (61). Ces moyens permettent d'effectuer un réglage plus précis de la distance entre le déflecteur (35) et le rotor (3) le plus en arrière.

Pour la transposition du rotor arrière (3) dans la deuxième position de travail, il est nécessaire de retirer la goupille (65) de la tringle (57) et de rendre les deux parties (63 et 64) coulissantes. Le déflecteur (35) peut alors être déplacé d'une manière notable vers l'arrière au moyen des leviers (36 et 37). Cette position est représentée sur la figure 6. Il peut être arrêté dans cette position en introduisant la goupille (65) ou une autre broche (43) dans l'orifice (44) du levier (37) et l'orifice (66) de la patte (42). Ledit déplacement du déflecteur (35) provoque le déplacement de la butée (49) dans la position inactive, par l'intermédiaire du taquet (54) de la plaquette (53) et du câble de commande (52). Le passage de l'arrêt (50) est ainsi possible en vue de la transposition de la poutre (13) et du rotor (3) dans la deuxième position de travail comme cela a été décrit en liaison avec le premier exemple de réalisation. Pour le retour dans la première position de travail, l'opérateur inverse les opérations et immobilise à nouveau les deux parties (63 et 64) de la tringle (57) au moyen de la goupille (65).

Il est bien évident que l'invention n'est pas limitée aux modes de réalisation décrits et représentés sur les dessins annexés. Des modifications restent possibles, dans le cadre du domaine de protection tel que défini par les revendications.

## Revendications

1. Machine de fenaison, notamment une andaineuse de végétaux fauchés, comportant un bâti avec plusieurs rotors d'andainage, lesquels rotors d'andainage sont entraînés en rotation durant le travail autour d'axes sensiblement verticaux qui sont munis de supports équipés de roues porteuses, ledit bâti comprenant une poutre de traction et une poutre de liaison à laquelle est relié au moins un des rotors d'andainage, la poutre de liaison étant articulée par rapport à la poutre de traction de manière à pouvoir être déplacée avec le ou les rotors qui y sont reliés latéralement vers la droite et/ou vers la gauche, au moins le rotor de la poutre de liaison qui se situe le plus en arrière étant muni d'un déflecteur d'andainage dont la position est réglable, ***caractérisée par le fait* qu'**elle comporte une butée (49) escamotable pour le déplacement de la poutre de liaison (13) autour de son axe d'articulation (4), des moyens (34) permettant de déplacer notablement le déflecteur d'andainage (35) par rapport au rotor (3) correspondant et un dispositif de commande (51) de la butée (49) qui est actionné par les moyens de déplacement (34) du déflecteur d'andainage (35).

2. Machine selon la revendication 1, ***caractérisée par le fait* que** le déflecteur d'andainage (35) est pivotable vers l'arrière à l'aide des moyens de déplacement (34), en vue de la transposition du rotor (3) le plus en arrière avec la poutre de liaison (13) d'une première position de travail dans une deuxième position de travail.

3. Machine selon la revendication 1, ***caractérisée par le fait* que** la butée escamotable (49) est constituée par un cylindre associé à un ressort qui le pousse dans la position active.

4. Machine selon la revendication 1 ou *3,* ***caractérisée par le fait* que** la butée escamotable (49) se situe sur la poutre de liaison (13), près de l'extrémité qui est reliée au rotor (3) le plus en arrière et qui est muni du déflecteur d'andainage (35).

5. Machine selon la revendication 4, ***caractérisée par le fait* que** l'axe (5) sensiblement vertical du rotor (3) le plus en arrière est pivotant sur lui-même et porte un arrêt (50).

6. Machine selon la revendication *5,* ***caractérisée par le fait* que** la butée escamotable (49) s'étend en position active dans la zone de déplacement dudit arrêt (50) qui est relié à l'axe (5) sensiblement vertical du rotor (3) le plus en arrière.

7. Machine selon la revendication 1 ou 2, ***caractérisée par le fait* que** les moyens de déplacement (34) du déflecteur (35) comprennent deux leviers (36 et 37) qui sont articulés sur une plaque (33) qui est reliée à l'axe (5) sensiblement vertical du rotor arrière (3) et sur une patte (42) portant le déflecteur (35), lesquels leviers (36 et 37) forment deux côtés d'un parallélogramme déformable.

8. Machine selon l'une quelconque des revendications précédentes, ***caractérisée par le fait* que** le dispositif de commande (51) de la butée (49) comporte un câble de commande (52) qui est relié à ladite butée (49) et à une plaquette (53) qui est articulée sur la plaque (33) qui est reliée à l'axe (5) sensiblement vertical du rotor (3) le plus en arrière.

9. Machine selon la revendication 8, ***caractérisée par le fait* que** le câble de commande (52) est guidé dans une gaine (55).

10. Machine selon la revendication 8, ***caractérisée par le fait* que** la plaquette (53) comporte un taquet d'entraînement (54) s'étendant dans la zone de déplacement d'un levier de déplacement (37) du déflecteur d'andainage (35).

11. Machine selon la revendication 9, ***caractérisée par le fait* que** la gaine (55) de guidage du câble de commande (52) se situe entre une paroi d'un logement (48) de la butée (49) sur la poutre de liaison (13) et un arrêt (56) situé à proximité de la plaquette (53).

12. Machine selon la revendication 7, ***caractérisée par le fait* qu'**un des leviers de déplacement (36 ou 37) est relié à la poutre de liaison (13) par une tringle (57) qui peut être rendue inopérante.

13. Machine selon la revendication 12, ***caractérisée par le fait* que** la tringle (57) est réalisée en deux parties coulissantes (63 et 64) pouvant être immobilisées l'une par rapport à l'autre au moyen d'une goupille (65) amovible.

14. Machine selon l'une quelconque des revendications précédentes, ***caractérisée par le fait* que** le déflecteur d'andainage (35) peut être immobilisé au moyen d'une broche ou d'une goupille (43, 65) dans une position dans laquelle le levier de déplacement (37) dudit déflecteur (35) maintient le taquet d'entraînement (54) de la plaquette (53) dans une position ou celle-ci tire sur le câble (52) du dispositif de commande (51) de sorte qu'il escamote la butée (49).

## Patentansprüche

1. Heuwerbungsmaschine, insbesondere Schwader für Mähgut, die einen Rahmen mit mehreren Schwadrotoren aufweist, wobei die Schwadrotoren im Betrieb um im Wesentlichen vertikale Achsen drehangetrieben werden, die mit mit Stützrädern ausgestatteten Stützen versehen sind, wobei der Rahmen einen Zugträger und einen Verbindungsträger aufweist, mit dem mindestens einer der Schwadrotoren verbunden ist, wobei der Verbindungsträger so an dem Zugträger angelenkt ist, dass er mit dem oder den damit verbundenen Rotoren seitlich nach rechts und/oder nach links verschoben werden kann, wobei zumindest der Rotor des Verbindungsträgers, der sich am weitesten hinten befindet, mit einem Schwadablenker versehen ist, deren Position einstellbar ist, ***dadurch gekennzeichnet,* dass** sie einen Anschlag (49), der zur Verschiebung des Verbindungsträgers (13) um seine Gelenkachse (4) einziehbar ist, Mittel (34), die eine merkliche Verschiebung des Schwadablenkers (35) bezüglich des entsprechenden Rotors (3) gestatten, und eine Vorrichtung (51) zur Betätigung des Anschlags (49), die durch die Mittel (34) zur Verschiebung des Schwadablenkers (35) bedient wird, aufweist.

2. Maschine nach Anspruch 1, ***dadurch gekennzeichnet,* dass** der Schwadablenker (35) zur Überführung des hintersten Rotors (3) mit dem Verbindungsträger (13) aus einer ersten Arbeitsstellung in eine zweite Arbeitsstellung mittels Verschiebungsmitteln (34) nach hinten schwenkbar ist.

3. Maschine nach Anspruch 1, ***dadurch gekennzeichnet,* dass** der einziehbare Anschlag (49) aus einem Zylinder besteht, der einer Feder zugeordnet ist, welche ihn in die aktive Position schiebt.

4. Maschine nach Anspruch 1 oder 3, ***dadurch gekennzeichnet,* dass** sich der einziehbare Anschlag (49) am Verbindungsträger (13) in der Nähe des Endes befindet, das mit dem mit dem Schwadablenker (35) versehenen hintersten Rotor (3) verbunden ist.

5. Maschine nach Anspruch 4, ***dadurch gekennzeichnet,* dass** die im Wesentlichen vertikale Achse (5) des hintersten Rotors (3) um sich selbst drehbar ist und ein Halteglied (50) trägt.

6. Maschine nach Anspruch 5, ***dadurch gekennzeichnet,* dass** sich der einziehbare Anschlag (49) in aktiver Position in dem Verschiebungsbereich des Halteglieds (50) erstreckt, das mit der im Wesentlichen vertikalen Achse (5) des hintersten Rotors (3) verbunden ist.

7. Maschine nach Anspruch 1 oder 2, ***dadurch gekennzeichnet,* dass** die Mittel (34) zur Verschiebung des Ablenkers (35) zwei Hebel (36 und 37) umfassen, die an einer mit der im Wesentlichen vertikalen Achse (5) des hinteren Rotors (3) verbundenen Platte (33) und an einem den Ablenker (35) tragenden Ansatz (42) angelenkt sind, wobei die Hebel (36 und 37) zwei Seiten eines verformbaren Parallelogramms bilden.

8. Maschine nach irgend einem der vorhergehenden Ansprüche, ***dadurch gekennzeichnet,* dass** die Vorrichtung (51) zur Betätigung des Anschlags (49) ein Betätigungskabel (52) aufweist, das mit dem Anschlag (49) und mit einer Scheibe (53) verbunden ist, welche an der Platte (33) angelenkt ist, die mit der im Wesentlichen vertikalen Achse (5) des hintersten Rotors (3) verbunden ist.

9. Maschine nach Anspruch 8, ***dadurch gekennzeichnet,* dass** das Betätigungskabel (52) in einer Hülle (55) geführt wird.

10. Maschine nach Anspruch 8, ***dadurch gekennzeichnet,* dass** die Scheibe (53) eine Antriebsknagge (54) aufweist, die sich in dem Verschiebungsbereich eines Hebels (37) zur Verschiebung des Schwadablenkers (35) erstreckt.

11. Maschine nach Anspruch 9, ***dadurch gekennzeichnet,* dass** sich die Führungshülle (55) des Betätigungskabels (52) zwischen einer Wand einer Aufnahme (48) des Anschlags (49) am Verbindungsträger (13) und einem sich in der Nähe der Scheibe (53) befindenden Halteglied (56) befindet.

12. Maschine nach Anspruch 7, ***dadurch gekennzeichnet,* dass** einer der Verschiebungshebel (36 oder 37) über eine Stange (57) mit dem Verbindungsträger (13) verbunden ist, die außer Funktion gesetzt werden kann.

13. Maschine nach Anspruch 12, ***dadurch gekennzeichnet,* dass** die Stange (57) aus zwei verschiebbaren Teilen (63 und 64) hergestellt ist, die mittels eines entfernbaren Stifts (65) bezüglich einander verriegelt werden können.

14. Maschine nach irgend einem der vorhergehenden Ansprüche, ***dadurch gekennzeichnet,* dass** der Schwadablenker (35) mittels eines Zapfens oder eines Stifts (43, 65) in einer Position verriegelt werden kann, in der der Hebel (37) zur Verschiebung des Ablenkers (35) die Antriebsknagge (54) der Scheibe (53) in einer Position hält, in der diese Scheibe am Kabel (52) der Betätigungsvorrichtung (51) zieht, so dass sie den Anschlag (49) einzieht.

## Claims

1. Haymaking machine, particularly a windrower for cut crops, including a frame with several windrowing rotors, which windrowing rotors are driven in rotation during work about approximately vertical axes which are fitted with supports equipped with carrier wheels, the said frame comprising a draft beam and a connecting beam to which at least one of the windrowing rotors is connected, the connecting beam being articulated with respect to the draft beam so that it can be moved together with the rotor or rotors connected to it laterally to the right and/or to the left, at least the rotor of the connecting beam which is located farthest back being equipped with a windrowing deflector, the position of which is adjustable, ***characterized in* that** it includes a retractable stop (49) for the displacement of the connecting beam (13) about its axis of articulation (4), means (34) allowing to shift the windrowing deflector (35) notably with respect to the corresponding rotor (3) and a device (51) for controlling the stop (49), which device (51) is actuated by the means (34) for shifting the windrowing deflector (35).

2. Machine according to claim 1, ***characterized in* that** the windrowing deflector (35) can be pivoted backward with the aid of the shifting means (34) with a view to bring the rearmost rotor (3) together with the connecting beam (13) from a first work position into a second work position.

3. Machine according to claim 1, ***characterized in* that** the retractable stop (49) is made up of a cylinder associated with a spring which pushes it into the active position.

4. Machine according to claim 1 or 3, ***characterized in* that** the retractable stop (49) is located on the connecting beam (13), near to the end connected to the rearmost rotor (3) which is equipped with the windrowing deflector (35).

5. Machine according to claim 4, ***characterized in* that** the approximately vertical axis (5) of the rearmost rotor (3) can pivot on itself and carries a stop (50).

6. Machine according to claim 5, ***characterized in* that** the retractable stop (49) extends in the active position in the zone of travel of the said stop (50) which is connected to the approximately vertical axis (5) of the rearmost rotor (3).

7. Machine according to claim 1 or 2, ***characterized in* that** the means (34) for shifting the deflector (35) comprise two levers (36 and 37) which are articulated to a plate (33) which is connected to the approximately vertical axis (5) of the rear rotor (3) and to a lug (42) carrying the deflector (35), which levers (36 and 37) form two sides of a deformable parallelogram.

8. Machine according to any one of the preceding claims, ***characterized in* that** the device (51) for controlling the stop (49) comprises a control cable (52) which is connected to the said stop (49) and to a small plate (53) which is articulated to the plate (33) which is connected to the approximately vertical axis (5) of the rearmost rotor (3).

9. Machine according to claim 8, ***characterized in* that** the control cable (52) is guided in a sheath (55).

10. Machine according to claim 8, ***characterized in* that** the small plate (53) includes a driving block (54) extending in the zone of travel of a lever (37) for shifting the windrowing deflector (35).

11. Machine according to claim 9, ***characterized in* that** the sheath (55) guiding the control cable (52) lies between a wall of a housing (48) of the stop (49) on the connecting beam (13) and a lock (56) located near to the small plate (53).

12. Machine according to claim 7, ***characterized in* that** one of the shifting levers (36 or 37) is connected to the connecting beam (13) by a rod (57) which can be rendered inoperative.

13. Machine according to claim 12, ***characterized in* that** the rod (57) is made in two sliding parts (63 and 64) which can be immobilized one with respect to the other by means of a removable pin (65).

14. Machine according to any one of the preceding claims, ***characterized in* that** the windrowing deflector (35) can be immobilized using a spindle or a pin (43, 65) in a position in which the lever (37) for shifting the said deflector (35) keeps the driving block (54) of the small plate (53) in a position in which said small plate pulls on the cable (52) of the control device (51) so that it retracts the stop (49).
